# EUROPÄISCHE PATENTANMELDUNG

(11) **EP 0 651 256 A1**
(43) Veröffentlichungstag der Anmeldung: **03.05.1995**
(21) Anmeldenummer: 94116126.7
(22) Anmeldetag: 13.10.1994
(51) Int. Cl.: G01P 1/04

(54) **Impulsgeber für Fahrzeuge**

(30) Priorität: 30.10.1993 DE 9316639 U
(71) Anmelder: VDO Adolf Schindling AG, D-60326 Frankfurt/Main (DE)
(72) Erfinder: Grill, Thomas, Dipl.-Ing. (FH), D-78050 Villingen-Schwenningen (DE); Wangler, Josef, Dipl.-Ing. (FH), D-78052 Villingen-Schwenningen (DE); Schultze, Hartmut, Dipl.-Ing. (FH), D-78052 Villingen-Schwenningen (DE)

(57) **Zusammenfassung**

Es wird ein Impulsgeber (10) für das unmittelbare Abtasten von Getrieberädern vorgeschlagen, welcher einen Sensor (11), beispielsweise einen Hall-Effekt-Sensor und eine Sensorelektronik (12) zur Aufbereitung der vom Sensor (11) gelieferten Signalpegel aufweist. Mittels eines der Sensorelektronik nachgeschalteten Impulsteilers (13) mit einstellbarem Teilungsverhältnis läßt sich auf einfache Weise eine Anpassung an eine Vielzahl unterschiedlicher Fahrzeugtypen vornehmen.

## Beschreibung

Die Erfindung betrifft einen Impulsgeber, insbesondere einen solchen zur Ermittlung und Berechnung von Fahrzeuggeschwindigkeiten nach dem Oberbegriff des Anspruchs 1.

### Stand der Technik:

Impulsgeber der genannten Art sind in vielfältiger Weise bekannt. Neben rein mechanisch betätigten und kontaktbehafteten Impulsgebern existieren solche auf optoelektronischer oder magnetisch bzw. induktiver Grundlage. Diese werden dann bevorzugt, wenn für einen solchen Impulsgeber Zuverlässigkeit und lange Nutzungsdauer gefordert werden. Ist mit erhöhter Temperatur oder Verschmutzung als widrigen Umgebungsbedingungen zu rechnen, werden bevorzugt magnetisch oder induktiv wirkende Geber verwendet. Im allgemeinen können solche Geber dabei für lineare Bewegungen oder Drehbewegungen eingesetzt werden, ohne daß große konstruktive Änderungen erforderlich sind. Im gleichen Zusammenhang ist es Stand der Technik, die Fahrgeschwindigkeit eines Fahrzeuges wie z.B. eines Personen- oder Lastkraftwagens über die Drehgeschwindigkeit der Fahrzeugräder zu ermitteln bzw. über solche Fahrzeugteile, die mit diesen in direkter kinematischer Verbindung stehen, wie dies z.B. für einzelne Getrieberäder, Kardanwellen und anderes gilt.

Zu diesem Zweck wird üblicherweise ein zusätzliches geschlitztes oder gezahntes weich- oder hartmagnetisches Impulsrad vorgesehen, das mit einem der genannten Fahrzeugteile in kinematischer Verbindung steht und dessen Drehfrequenz proportional zur Geschwindigkeit des Fahrzeugs ist. Seine Schlitze oder Zähne bewirken eine Änderung der magnetischen Flußdichte am Installationsort eines geeigneten magnetfeldempfindlichen Sensors, z.B. eines Hall-Sensors oder eines induktiv arbeitenden Näherungssensors. Auf diese Weise werden durch den Sensor periodisch erzeugte Änderungen eines lokalen Magnetfeldes in elektrische Impulse umgesetzt. Diese Impulse sind ein wegabhängiges, insbesondere wegproportionales Signal, welches auf den Eingang eines zugeordneten Anzeige- oder Registriergerätes geleitet wird, ggf. unter Zwischenschaltung einer Anpaßelektronik.

### Problem:

Wiewohl Anordnungen der beschriebenen Art sich durch ihre Zuverlässigkeit bewährt haben, ist je nach Fahrzeugtyp ein spezielles Impulsrad mit korrekter Zähnezahl vorzusehen, um eine geeignete Relation zwischen Geschwindigkeit des Fahrzeugs und einer Impulsfrequenz des Sensors zu erhalten, die von dem nachgeschalteten Anzeige- oder Registriergerät korrekt verarbeitet werden kann.

Aufgabe der Erfindung ist es daher, einen universelleren Impulsgeber bereitzustellen, der bevorzugt ohne ein spezielles Impulsrad funktioniert und stattdessen durch Zähne eines Zahnrades eines Fahrzeuggetriebes angesteuert wird und dessen Ausgangssignal aufgrund seiner Impulsform und -frequenz direkt auf das Anzeige- oder Registriergerät geleitet werden kann, wobei der Impulsgeber aufgrund seiner Konstruktion für einen weiten Bereich in Bezug auf fahrzeugtypische Quotienten aus Fahrzeuggeschwindigkeit und Umfangsgeschwindigkeit eines Getriebezahnrades geeignet sein soll.

### Erfindung:

Diese Aufgabe wird dadurch gelöst, daß einem Impulsgeber mit galvanomagnetischem Sensor eine Impulsteilerschaltung mit intern einstellbarem Teilerverhältnis und bei Bedarf eine Leitungstreiberschaltung nachgeschaltet ist.

Auf diese Weise werden folgende Vorteile realisiert:
Zum einen ergibt sich eine stark vereinfachte Anpaßbarkeit an eine Vielzahl unterschiedlicher Fahrzeugtypen bei gleichzeitigem Entfall eines separat und fahrzeugtypisch vorzusehenden Impulsrades zur Ansteuerung eines magnetfeldempfindlichen Sensors.

Gleichzeitig wird auch die Lagerhaltung von Kombinationen an Impulsrädern und zugehörigen Sensoren stark vereinfacht.

Weiterhin ist eine solche erfindungsgemäße Lösung dann von Vorteil, wenn die nachgeschalteten Registrierungs- oder Anzeigevorrichtungen für herkömmliche, eher niedrige Eingangsfrequenzen ausgelegt sind, sodaß auf eine erforderliche Anpaßelektronik verzichtet werden kann. Gleichzeitig entfallen entsprechende zusätzliche Steckerschnittstellen und damit potentielle Fehlerquellen für eine solche Anpaßelektronik. Dies bietet insbesondere dann einen deutlichen Kostenvorteil, wenn es sich dabei aufgrund gesetzlicher Vorschriften um plombierte Steckerschnittstellen handelt, wie dies z.B. bei Fahrtschreiberanlgen der Fall ist.

Darüberhinaus erlaubt es die niedrigere Ausgangsfrequenz eines erfindungsgemäßen Impulsgebers, Impulse mit vergleichsweise geringer Flankensteilheit vorzusehen. Hierduch ist es leichter, Störspannungen auf den Ausgangsleitungen mit größerer Zuverlässigkeit zu eliminieren.

Durch Fortfall einer gegebenenfalls sonst erforderlichen Anpaßelektronik wird zusätzlich auch der Strombedarf für das komplette Registrierungssystem, bestehend aus Impulsgeber, Anpasselektronik und Anzeige- und Registrierungseinheit, reduziert, wodurch eine geringere Stromentnahme (Ladungsentnahme) aus der Fahrzeugbatterie während längerer Stillstandszeiten resultiert. Weiterhin wird es aus verschiedenen Gründen, z. B. aus Gründen des Explosionsschutzes, angestrebt, die von der Registrierungseinheit bereitzustellende elektrische Versorgungsleistung für den Impulsgeber und weitere zugehörige periphere Einrichtungen auf einen niedrigen Wert zu limitieren. Die erfindungsgemäße Lösung kommt auch dieser Anforderung in vorteilhafter Weise entgegen.

### Darstellung der Erfindung:

Diese und weitere Aspekte der Erfindung werden anhand der Zeichnung im einzelnen dargestellt.

Es zeigt:
- Fig. 1: ein Blockschaltbild eines erfindungsgemäßen Impulsgebers
- Fig. 2: eine ausgeführte Schaltung für einen erfindungsgemäßen Impulsgeber
- Fig. 3: ein Blockschaltbild eines erfindungsgemäßen Impulsgebers mit einem elektronisch programmierbaren Schalter (Selektor) zur Einstellung des Teilerverhältnisses eines Impulsteilers

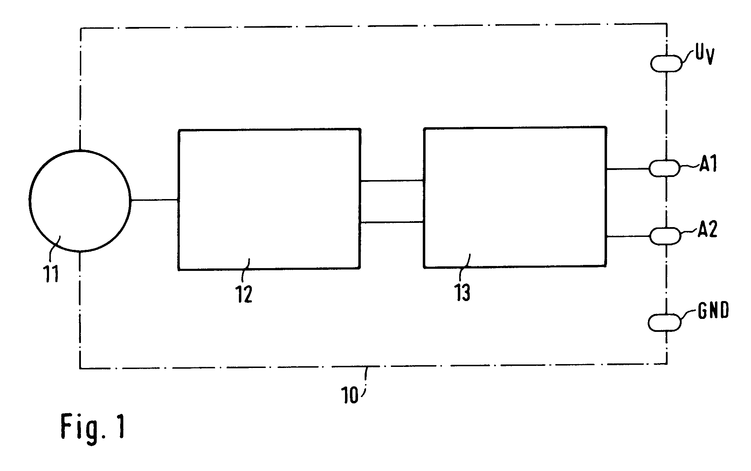

Der in Fig. 1 dargestellte Impulsgeber 10 weist einen Sensor 11, eine Sensorelektronik 12 sowie einen Impulsteiler 13 und äußere Beschaltungspunkte Uv, A1, A2 und GND für Versorgungs- und Signalspannungen auf.

Bei dem Sensor 11 handelt es sich entweder um einen Sensor auf galvanomagnetischer Basis wie z.B. einen Hall-Effekt-Sensor oder einen magnetoresistiven Sensor. In einer anderen Ausführungsform handelt es sich bei dem Sensor um einen induktiv wirkenden Sensor. Beide Sensorarten reagieren auf wechselnde Flußdichten eines magnetischen Feldes, insbesondere verursacht durch die An- bzw. Abwesenheit eines weich- oder hartmagnetischen Objektes in unmittelbarer Nähe des Sensors. Ein solches ist zum Beispiel ein in unmittelbarer Nähe des Sensors stehender Zahn eines Getriebe-Zahnrades, welcher die Erzeugung eines Ausgangssignals des Sensors bewirkt. Steht eine Zahnlücke dem Sensor gegenüber, gibt der Sensor kein logisch aktives Signal ab. Es versteht sich, daß die Zuordnung von logisch aktivem und logisch inaktivem Signal zu Zahn bzw. Zahnlücke eines Zahnrades auch in invertierter Weise vorgenommen werden kann. Bei Drehung des Zahnrades gibt der Sensor also eine Impulsfolge ab, die aus wechselnden logisch aktiven und inaktiven Signalpegeln besteht. Diese Signalpegel werden zur verbesserten Weiterverarbeitung durch eine nachgeschaltete Sensorelektronik 12 aufbereitet, welche typischerweise mindestens einen Verstärker enthält und auch als Verbundschaltung bzw. integrierte Schaltung den Sensor 11 inkorporieren kann. Die Sensorelektronik 12 gibt bei Drehung des Zahnrades ebenfalls eine Impulsfolge ab, bestehend aus wechselnden logisch aktiven und inaktiven Signalpegeln. Gemäß der Erfindung wird dieser Funktionsumfang dadurch erweitert, daß zu Sensor 11 und Sensorelektronik 12 ein Impulsteiler 13 hinzugefügt wird, so daß eine geschlossene Einheit mit einer geringen Anzahl von Beschaltungspunkten geschaffen wird. In Fig. 1 sind als äußere Anschlußpunkte für den Impulsgeber gemäß der Erfindung zwei separate Signalausgänge A1 und A2 gezeigt sowie die Anschlußpunkte für die Stromversorgung Uv und Bezugspotential-Verbindungspunkt GND. Aus Gründen einer verbesserten Prüfungsmöglickeit für die korrekte Funktion des Impulsgebers 10, wie es zum Beispiel für die Erkennung von Manipulationen am Impulsgeber erforderlich ist, liegen die Ausgangssignale auf den Anschlußpunkten A1 und A2 in invertierter bzw. im wesentlichen antivalenter Form vor.

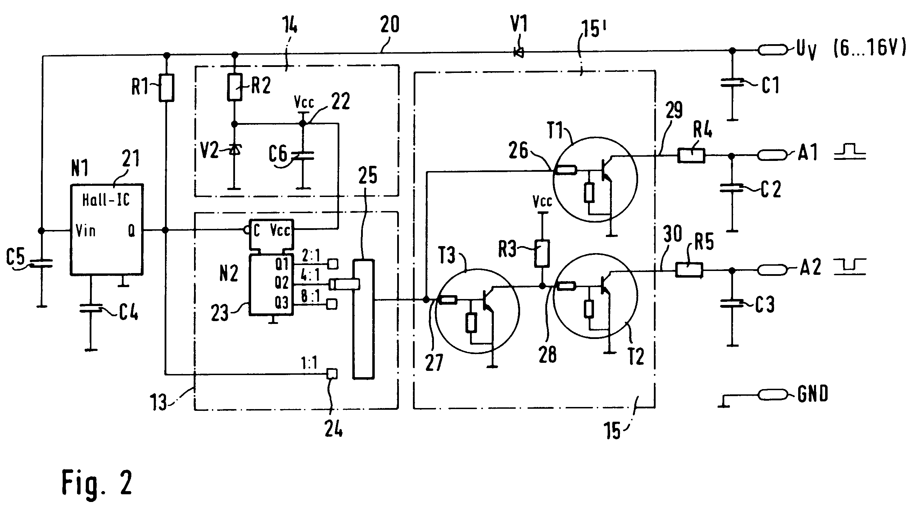

Fig. 2 zeigt das detaillierte Schaltbild einer ausgeführten erfindungsgemäßen Schaltung. - An Anschlußpunkt Uv liegt eine Versorgungsspannung, wie sie in Bordnetzen von Kraftfahrzeugen typisch ist. Höherfrequente Störspannungen werden durch einen Siebkondensator C1 reduziert, eine Schutzdiode V1 schützt die Impulsgeberschaltung 10 vor Verpolung. Die von der Schutzdiode V1 abgegebene Versorgungsspannung wird auf Versorgungsleitung 20 gegeben, welche Hall-IC 21 speist sowie einen Spannungsregler bestehend aus Widerstand R2, Z-Diode V2 und Glättungskondensator C6.

Hall-IC 21 faßt das Sensor-Element 11 und wesentliche Teile der Sensor-Elektronik 12 aus Fig. 1 zusammen und liefert, je nach Präsenz eines Zahnrad-Zahns in seiner unmittelbaren Nähe, an seinen Ausgang Q ein logisch aktives oder inaktives Signal.

Hall-IC 21 reagiert dabei direkt auf magnetische Wechselfelder und vermag, gegebenenfalls unterstützt durch einen Hilfs-Permanentmagneten, mit genügend hoher Geschwindigkeit die Passage einzelner Getriebe-Zähne zu erfassen.

Koppelpunkt Vin ist mit Versorgungsleitung 20 und einem Glättungskondensator C5 verbunden. Kondensator C4 bewirkt eine interne Hysterese und damit eine Entprellfunktion für das Hall-IC 21. Ausgang Q ist mit Pull-up Widerstand R1 verbunden sowie mit Koppelpunkt 24, an dem eine Impulsfolge abgegriffen wird, deren Frequenz direkt der Umfangs-Geschwindigkeit eines abzutastenden, rotierenden Getriebe-Zahnrades entspricht. Gleichzeitig ist Ausgang Q verbunden mit dem Clock-Eingang C eines Binärzählers N2 (Bezugsziffer 23). Dieser Zähler wird mit einer Konstantspannung von einigen Volt gespeist, welche durch eine Spannungsregelschaltung 14 erzeugt und an Koppelpunkt 22 abgegriffen wird und durch Kondensator C6 zusätzlich stabilisiert ist. Die Größe dieser Konstantspannung wird durch Z-Diode V2 vorgegeben.

Binärzähler 23 teilt die an Eingang C anliegende Impulsfolge in mehreren Stufen durch einen ganzzahligen Faktor. Gemäß dem gezeigten, kostengünstigen Ausführungsbeispiel sind die ganzzahligen Faktoren Potenzen von 2, wie z.B. 2, 4 und 8. Gemäß bekanntem Stand der Technik bedeutet eine Teilung der Impulsrate um den Faktor 2, daß zwei Eingangsimpulse auf dem Eingang C erforderlich sind, um einen kompletten Ausgangsimpuls auf dem Ausgang Q1 zu erzeugen. Ein Koppel-Schalter 25 gestattet die Selektion eines gewünschten Ausgangssignales, wobei entweder eines der an Ausgängen Q1 bis Q3 anliegenden, frequenzreduzierten (frequenzgeteilten) Signale gewählt wird oder aber das Ausgangssignal des Hall-IC 21 über Koppelpunkt 24 selektiert werden kann, was einem Teilungsverhältnis von 1:1 entspricht. Um die Ausführung des Koppel-Schalters so kostengünstig wie möglich zu gestalten, wird dieser durch Steckbrücken, Lötbrücken oder Auftrenn-Brücken realisiert. Je nach Ausführungsform wird deshalb das gewählte Teilerverhältnis bei der Herstellung des Impulsgebers festgelegt und wird normalerweise nicht mehr nachträglich verändert.

Das mittels Koppel-Schalter 25 selektierte Ausgangssignal des Binärzählers 23 wird sodann verstärkt. Zur Verstärkung dienen zum einen der Transistor T1, zum anderen die Transistor-Kombination bestehend aus T3 und T2. Mit 26, 27 und 28 sind die Steuereingänge der Transistoren bezeichnet. Transistoren T1 und T2 sind als Open-Collector-Transistoren geschaltet. Transistor T1 wird über seinen Steuereingang 26 angesteuert. Nach bekannter Wirkungsweise bewirkt eine positve Spannung an diesem Steuereingang einen leitfähigen Transistor, so daß eine an Ausgang A1 anliegende positive Pull-up Spannung über Widerstand R4 und die Emitter-Kollektor-Strecke des Transistors T1 reduziert wird. Die an Ausgang A1 anliegende Spannung ist also im Vergleich zu der an Steuereingang 26 anliegenden Spannung invertiert und verstärkt, wie dies an sich bekannt ist. Zwischen Kollektorausgang 29 des Transistors T1 und Koppelpunkt A1 ist eine RC-Kombination bestehend aus R4 und C3 geschaltet, welche im wesentlichen eine Schutzfunktion bewirkt, und zwar in Bezug auf Störspannungsspitzen und auf höherfrequente Störimpulse, die durch Störstrahlung auf eine an Ausgang A1 angeschlossene Verbindungsleitung hervorgerufen werden.

Durch die Serienschaltung der Transistoren T3 und T2 ergibt sich eine ähnliche Signalverstärkung, jedoch erfolgt eine zweimalige Invertierung des ansteuernden Signals, mithin eine phasengleiche Verstärkung. Zur ordnungsgemäßen Funktion des Transistors T3 muß dieser ebenfalls mit einer Pull-up Spannung versorgt werden, welche dem Spannungsregler 14 an Koppelpunkt 22 entnommen wird und über Widerstand R3 an den Kollektor von T3 und an den Steuereingang 28 von T2 gelegt wird. Zwischen Signalausgang A2 und Kollektor-Ausgang 30 des Transistors T2 befindet sich ebenfalls eine RC-Kombination, bestehend aus Widerstand R5 und Kondensator C3. Diese ist im wesentlichen gleich dimensioniert wie die der Transistor T1 nachgeschalteten RC-Kombination Sofern an Ausgängen A1 und A2 nicht gleichfrequente und gegeneinander invertierte Impulse vorzufinden sind, ist dies ein eindeutiger Hinweis auf eine Fehlfunktion der Impulsgeber-Schaltung oder der dort angeschlossenen Verbindungsleitungen. Eine solche Fehlfunktion kann sich z.B. nach einer Manipulation an diesen Systemkomponenten ergeben.

Es versteht sich, daß in einer vereinfachten Version eines Impulsgebers gemäß der Erfindung auf den zusätzlichen Signalausgang A2 verzichtet werden kann. Genauso ist die Erfindung nicht darauf beschränkt, einen Frequenzteiler mit einem Teilerverhaltnis von 2, 4, 8 usw. zu verwenden, sondern sieht beliebige ganzzahlige Frequenzteilungsverhältnisse vor. Bei Frequenzteilungsschaltungen mit einem ungeradzahligen Teilungsvernältnis n wird in der Regel das Tastverhältnis der niederfrequenten Ausgangsfrequenz nicht 50% betragen, sondern in der Nähe dieses Wertes liegen.

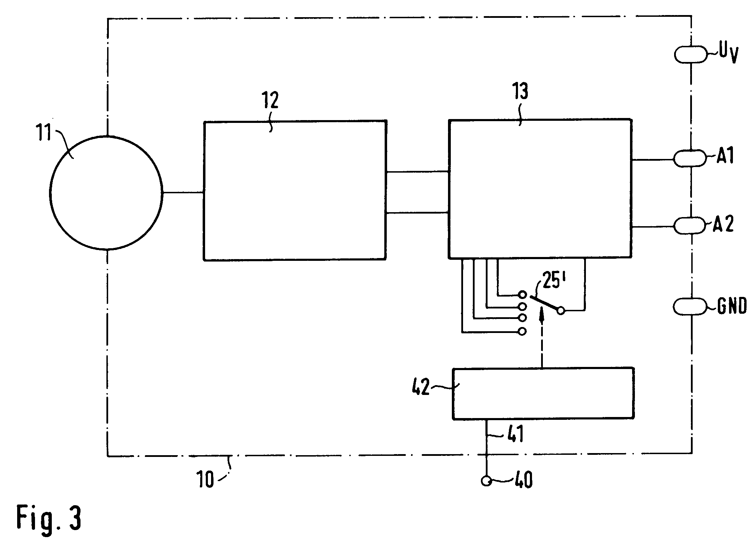

Fig. 3 weist eine weitere grundlegende Ausführungsform gemäß der Erfindung auf. Hierbei wird der an sich kostengünstige, durch Lötbrücken oder aufgetrennte Leiterbahnen realisierte Selektions-Schalter 25 durch einen elektronischen Schalter 25' ersetzt, welcher durch eine elektronisch wirkende, extern ansteuerbare Programmierelektronik 42 betätigt wird. Ein an Koppelpunkt 40 anliegendes Programmierungssignal wird über Programmierungsleitung 41 auf die Programmierungselektronik 42 gegeben, welche daraufhin den elektronischen Schalter 25' betätigt. Die Programmierelektronik 42 sperrt sich nach diesem Vorgang selbst, d.h. dieser Vorgang ist nur einmal ausführbar, um eine beabsichtigte oder unabsichtliche nachträgliche Änderung auszuschließen. Um den erforderlichen Aufwand an Programmierungsleitungen klein zu halten, wird bevorzugt nur eine Programmierungsleitung 41 vorgesehen. Um zwischen Nutzdaten-Signalen und Programmiersignalen zum Festlegen des einzustellenden Impulsteilerverhältnisses zu unterscheiden, werden die erforderlichen Informationen über die bevorzugt einzige Leitung 41 in Form eines Telegramms mit seriell codierten Impulsen gegeben, welche Technik an sich bekannt ist. In einer anderen Ausführung werden die Nutzdaten mittels z.B. positiver Signalpulse über die Programmierungsleitung 41 übertragen, während ein definierendes, abschließendes Programmierungssignal von entgegengesetzter Polarität ist. Anstelle von seriell codierten Signalen ist es hierbei auch möglich, insbesondere die Information zur Selektion des Teilerverhältnisses der Impulsteilerschaltung 13 durch die Dauer der z.B. positiven Signalimpulse zu codieren. Wiewohl die zuletzt genannten Ausführungsformen gemäß Fig. 3 zusätzlichen Bauteile-Aufwand erfordern, bieten diese erfindungsgemäße Varianten den Vorteil, daß bedarfsgerecht jeweils nur ein und dasselbe Produkt in den minimal erforderlichen Mengen hergestellt und gelagert werden kann, dessen besondere Spezifikationen erst kurz vor der Auslieferung durch einen einfach auszuführenden einmaligen Programmierungsvorgang festgelegt werden. Durch eine Maßnahme der genannten Art ist es möglich, organisatorische Kosten einzusparen und gegebenenfalls die Gesamtkosten des Impulsgebers weiter zu reduzieren.

## Patentansprüche

1. Inkrementell, weg- oder winkelproportional arbeitender Impulsgeber insbesondere für Fahrzeuge,
dadurch gekennzeichnet,
daß einem galvanomagnetischen Sensor (11, 21) eine Impulsteilerschaltung (13) sowie mindestens eine Leitungstreiberschaltung (15) nachgeschaltet ist.

2. Inkrementell arbeitender Impulsgeber mit einer Schaltung zur weg- oder winkelproportionalen Impulsgabe,
dadurch gekennzeichnet,
daß ein galvanomagnetisch oder induktiv arbeitender Sensor (11, 21), eine Spannungsregelschaltung (14), eine Impulsteilerschaltung (13) und mindestens eine Leitungstreiberschaltung (15, 15') vorhanden ist.

3. Inkrementell arbeitender Impulsgeber mit einer Schaltung zur weg- oder winkelproportionalen Impulsgabe,
dadurch gekennzeichnet,
daß ein galvanomagnetisch oder induktiv arbeitender Sensor (11, 21), eine Spannungsregelschaltung (14), und eine Impulsteilerschaltung (13) vorhanden ist.

4. Impulsgeber nach Anspruch 2 oder 3,
dadurch gekennzeichnet,
daß der Sensor (11, 21) die Anwesenheit einzelner Zähne eines ferromagnetischen Getrieberades berührungslos erkennt und nach der Passage von jeweils n Zähnen des Getrieberades einen Impuls abgibt, wobei n eine ganze Zahl größer oder gleich 1 ist.

5. Impulsgeber nach Anspruch 2 oder 3,
dadurch gekennzeichnet,
daß die Impulsteilerschaltung (13) eine Mehrzahl von Ausgangssignalen unterschiedlichen Teilungsverhältnisses liefert und eines der Ausgangssignale mittels einer Steck- oder Lötverbindung (25) wahlfrei auf den Eingang mindestens eines Leitungstreibers (15) geschaltet ist.

6. Impulsgeber nach Anspruch 5,
dadurch gekennzeichnet,
daß eines der Ausgangssignale der Impulsteilerschaltung (13) auf die Eingänge von genau zwei Leitungstreibern (15, 15') geschaltet ist, deren Ausgangssignale im wesentlichen komplementär zueinander sind.

7. Impulsgeber nach einem der vorhergehenden Ansprüche,
dadurch gekennzeichnet,
daß das Teilerverhältnis der Impulsteilerschaltung (13) mittels einer Programmierelektronik (42) und durch ein auf mindestens einer Steuer- oder Programmierungsleitung (41) anliegendem Programmierungssignal genau einmal programmiert und festgelegt werden kann.

8. Impulsgeber nach Anspruch 7,
dadurch gekennzeichnet,
daß das auf der mindestens einen Steuer- oder Programmierungsleitung (41) anliegende Programmierungssignal durch eine serielle Impulsfolge dargestellt wird.

9. Geschwindigkeitsmeßvorrichtung nach Anspruch 7 oder 8,
dadurch gekennzeichnet,
daß das auf der mindestens einen Steuer- oder Programmierungsleitung (41) anliegende Signal mit mindestens einem Impuls von vordefinierter Polarität und Länge Nutzdaten zur Auswahl eines Teilerverhältnisses der Impulsteilerschaltung 13 überträgt und mit mindestens einem Impuls der entgegengesetzten Polarität ein Programmierungssignal zur endgültigen Festlegung des Teilerverhältnisses der Impulsteilerschaltung (13) überträgt.

10. Impulsgeber nach einem der vorhergehenden Ansprüche,
dadurch gekennzeichnet,
daß die Impulsteilerschaltung (13) eine Mehrzahl von Ausgangssignalen unterschiedlichen Tastverhältnisses liefert und eines der Ausgangssignale über einen Verbindungsleiter (25) wahlfrei auf den Eingang mindestens eines Leitungstreibers (15) geschaltet ist, wobei der Verbindungsleiter (25) mittels einer selektiv wirkenden Trennung einer oder mehrerer überzähliger Verbindungsleitungen eingerichtet worden ist.
